# EUROPÄISCHE PATENTANMELDUNG

(11) **EP 1 126 689 A2**
(43) Veröffentlichungstag der Anmeldung: **22.08.2001**
(21) Anmeldenummer: 00123836.9
(22) Anmeldetag: 02.11.2000
(51) Int. Cl.: H04M 15/00

(54) **Verfahren und Schaltungsanordnung zum Abgleich der Tarifklasse in Telefonnetzen**

(30) Priorität: 29.01.2000 DE 10003897
(71) Anmelder: Deutsche Telekom AG, 53113 Bonn (DE)
(72) Erfinder: Brandt, Dagmar, 06184 Dieskau/Zwintschöna (DE); Kunz, Bernd, 76316 Malsch (DE)

(57) **Zusammenfassung**

Es wird ein Verfahren zur einfachen Überwachung und zum Abgleich der Tarifklasse in Telefonnetzen beschrieben, womit einem Kunden umgehend das Anliegen einer falschen Tarifklasse signalisiert und ihm die Möglichkeit einer Störungsmeldung eröffnet wird. Dazu wird eine normierte Verbindungsart definiert, deren zu erwartende Tarifinformation vom Kunden bzw. Betreiber änderbar im Telefon hinterlegt wird. Erzeugt der Kunde dann eine solche Verbindung, wird die vom Telefonnetz angelegte Tarifinformation mit der im Gerät hinterlegten verglichen. Bei Abweichung wird eine Störungsmeldung, zum Beispiel am Display des Telefons, erzeugt. Der Kunde bzw. Betreiber gibt über eine Eingabeschaltung (1) die zu erwartende Tarifinformation ein. Wenn gewünscht, kann auch noch zusätzlich der Vergleichszeitraum eingegeben werden. Die Daten werden dann in einem Tarifspeicher (2) hinterlegt. Wird am Telefon eine Rufnummer mittels Wahlaussendungseinheit (3) gewählt, werden in einer Vergleichseinheit (4) folgende Daten verglichen:
- entspricht die gewählte Telefonnummer der normierten Verbindung, zum Beispiel Ortsgespräch?
- stimmt die aktuelle Uhrzeit mit der für den Prüfzeitraum festgelegten Uhrzeit überein? Die aktuelle Uhrzeit kann einer internen Uhr (6) entnommen werden.

Sind beide vorgenannten Kriterien erfüllt, wird ein Vergleich der im Tarifspeicher (2) hinterlegten Tarifinformation mit der vom Telefonnetz im Tarifempfänger (7) enthaltenen Information durchgeführt. Bei Abweichungen wird ein Modul Störungsbearbeitung (5) initialisiert, wodurch eine Störungsanzeige am Display des Telefons oder eine Störungsmeldung, zum Beispiel an ein zentrales Hintergrundsystem, erzeugt wird.

## Beschreibung

Die Erfindung betrifft ein Verfahren und eine Schaltungsanordnung zum Abgleich der Tarifklasse in Telefonnetzen nach dem Oberbegriff des Patentanspruchs 1.

Es ist bekannt, auf Antrag einem Kunden vom Telefonnetz eine Tarifinformation zu übermitteln. Je nach Anschlußart erfolgt diese Übermittlung als 16kHz-Impuls bei analogen Anschlüssen oder als Tarifinformation AOC bei ISDN-Anschlüssen.

Ein Kunde kann diese Tarifinformation zur Überwachung seiner bisher aufgelaufenen Telefonentgelte verwenden; ein Betreiber von Telefonen mit Bezahlmedium, wie Münzen oder Karten, zum Kassieren der Telefonentgelte gegenüber seinen Kunden.

Je nach Kundenart und beauftragtem Rabattpaket kann sich die Tarifinformation bei gleicher gewählter Telefonnummer unterscheiden. Ein Normalkunde zahlt für ein Ortsgespräch einen anderen Preis als ein ISDN-Kunde oder ein Kunde mit Business-Tarif. Tarife an öffentlichen Münz- und Kartentelefonen können ebenfalls abweichend sein.

Wurde nun der Kundenanschluß durch technische oder administrative Fehler in eine falsche Tarifklasse gelegt, wird eine falsche Tarifinformation zum Kunden gesendet. Es kommt dann zu Abweichungen zwischen der vom Kunden aufgrund der Telefondisplay-Anzeige erwarteten und der zugesandten Telefonrechnung, bzw. ein Kunde mit zum Beispiel einem Münz- oder Kartentelefon kassiert von seinem Kunden einen falschen Gesprächspreis.

Der erste Fall kann zu Rechnungsbeschwerden und damit Verärgerung der Kunden führen, der zweite Fall führt möglicherweise sogar zu Mindereinnahmen an den Münz- und Kartentelefonen, wenn die Tarifinformation zu preiswert war.

Der Erfindung liegt deshalb die Aufgabe zugrunde, eine automatische Überwachungsmöglichkeit zu schaffen, die laufend prüft, ob die richtige Tarifklasse angelegt wurde und dem Kunden umgehend das Anliegen einer falschen Tarifklasse signalisiert, wodurch ihm noch die Möglichkeit einer Störungsmeldung möglich sein soll.

Die erfindungsgemäße Lösung der Aufgabe für ein Verfahren ist im Kennzeichen des Patentanspruchs 1 charakterisiert.

Weitere Lösungen bzw. Ausgestaltungen für das erfindungsgemäße Verfahren sind in den Kennzeichen der Patentansprüche 2 bis 5 angegeben.

Die Lösung für eine Schaltungsanordnung ist im Patentanspruch 6 charakterisiert.

Die automatische Überwachung, ob die richtige Tarifklasse angelegt wurde, wird gemäß dem erfindungsgemäßen Verfahren und der entsprechenden Schaltung dadurch erreicht, daß eine normierte Verbindungsart definiert wird, deren zu erwartende Tarifinformation vom Kunden bzw. einem Betreiber änderbar im Telefon hinterlegt wird. Erzeugt der Kunde dann eine solche Verbindung, wird die vom Telefonnetz angelegte Tarifinformation mit der im Gerät hinterlegten verglichen. Bei Abweichungen wird eine Störungsmeldung erzeugt, die zum Beispiel am Display des Telefons sichtbar gemacht wird.

Vorteilhaft ist zum Beispiel die Definition eines Ortsgepräches als normierte Verbindung, da Ortsgespräche sehr häufig geführt werden und somit eine regelmäßige Überprüfung damit automatisch erfolgt. Bei Tarifänderungen zu verschiedenen Tageszeiten ist die vom Kunden änderbare Festlegung eines Prüfzeitraums möglich. Besonders für an zentralen Hintergrundsystemen betriebene Telefone, wie Münz- und Kartentelefone, ist es möglich, sowohl den Prüfzeitraum als auch die zu erwartende Tarifinformation als Parameter fern änderbar zu machen. Dadurch muß nicht jedes Gerät bei Tarifänderungen aufgesucht und an Ort und Stelle geändert werden.

Besonders für an zentralen Hintergrundsystemen betriebene Telefone ist es vorteilhaft, die Störungsmeldung nicht am Display des Gerätes anzuzeigen, sondern an das Hintergrundsystem zu übermitteln.

Weitere Vorteile, Merkmale und Anwendungsmöglichkeiten des automatischen Abgleichs der Tarifklasse durch eine Überwachung mittels Vergleich einer normierten Verbindungsart mit der vom Telefonnetz angelegten Tarifinformation ergeben sich aus der nachfolgenden Beschreibung in Verbindung mit einem in der Zeichnung dargestellten Ausführungsbeispiel.

Die Erfindung wird im folgenden anhand eines in der Zeichnung dargestellten Ausführungsbeispiels näher beschrieben. In der Beschreibung, in den Patentansprüchen, in der Zusammenfassung und in der Zeichnung werden die in der hinten angeführten Liste der Bezugszeichen verwendeten Begriffe und zugeordneten Bezugszeichen verwendet.

In der Zeichnung bedeutet:

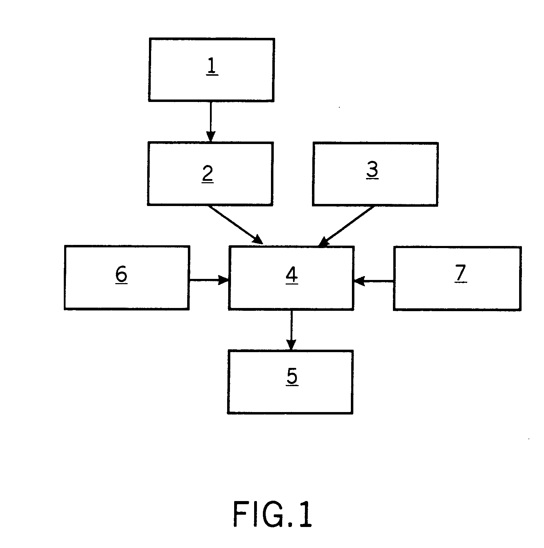

- Fig. 1: ein Prinzipschaltbild zur Durchführung des Verfahrens.

Bevor die detaillierte Funktionsweise der Prinzipschaltung und die Wirkungsweise des erfindungsgemäßen Verfahrens erklärt werden, soll zunächst eine Beschreibung der grundsätzlichen Wirkungsweise des Verfahrens folgen.

Um eine einfache automatische Überwachungsmöglichkeit zu schaffen, wird zunächst eine normierte Verbindungsart definiert, deren zu erwartende Tarifinformation vom Kunden bzw. einem Betreiber änderbar im Telefon hinterlegt wird. Erzeugt der Kunde dann eine solche Verbindung, wird die vom Telefonnetz angelegte Tarifinformation mit der im Gerät hinterlegten verglichen. Bei Abweichungen wird eine Störungsmeldung erzeugt, die zum Beispiel am Display des Telefons sichtbar gemacht wird.

Die Eingabe der zu erwartenden Tarifinformation kann mittels Menüführung im Telefon selbst über die Wähltastatur erfolgen. Sie ist damit bei Tarifänderungen vom Kunden bzw. Betreiber selbst änderbar.

Vorteilhaft ist zum Beispiel die Definition eines Ortsgespräches als normierte Verbindung, da Ortsgespräche sehr häufig geführt werden und somit eine regelmäßige Überprüfung automatisch erfolgt. Da sich die Tarifinformationen zu verschiedenen Tageszeiten ändern können, ist die vom Kunden änderbare Festlegung eines Prüfzeitraums möglich. Zum Beispiel werden nur die zwischen 9 und 12 Uhr geführten Gespräche zum Vergleich herangezogen. Selbstverständlich können auch andere Zeiträume gewählt werden. Besonders für an zentralen Hintergrundsystemen betriebene Telefone, wie Münz- und Kartentelefone, ist es möglich, sowohl den Prüfzeitraum als auch die zu erwartende Tarifinformation als Parameter fern änderbar zu machen. Dadurch wird erreicht, daß bei einer Tarifänderung nicht jedes Gerät aufgesucht werden muß und entsprechend geändert werden muß.

In Fig. 1 ist nun ein Prinzipschaltbild zur Durchführung des Verfahrens gezeigt, anhand dessen die einzelnen Schritte des erfindungsgemäßen Verfahrens detailliert erklärt werden.

Ein Kunde bzw. Betreiber kann über eine Eingabeschaltung 1 die zu erwartende Tarifinformation und, wenn gewünscht, den Vergleichszeitraum eingeben. Die eingegebenen Daten werden in einem Tarifspeicher 2 hinterlegt.

Wird am Telefon eine Rufnummer mittels Wahlaussendungseinheit 3 gewählt, werden in der Vergleichseinheit 4 folgende Daten verglichen:
- entspricht die gewählte Telefonnummer der normierten Verbindung, zum Beispiel Ortsgespräch?
- stimmt die aktuelle Uhrzeit mit der für den Prüfzeitraum festgelegten Uhrzeit überein? Die aktuelle Uhrzeit kann dabei zum Beispiel einer schaltungsinternen Uhr 6 entnommen werden.

Sind beide vorgenannten Kriterien erfüllt, wird ein Vergleich der im Tarifspeicher 2 hinterlegten Tarifinformation und der vom Telefonnetz im Tarifempfänger 7 erhaltenen Information durchgeführt.

Bei Abweichungen wird das Modul Störungsbearbeitung 5 initialisiert, das eine Störungsanzeige am Display oder eine Störungsmeldung, zum Beispiel an ein zentrales Hintergrundsystem, erzeugt.

### Liste der Bezugszeichen

- 1: Eingabeschaltung
- 2: Tarifspeicher
- 3: Wahlaussendungseinheit
- 4: Vergleichseinheit
- 5: Störungsbearbeitung
- 6: Uhr
- 7: Tarifempfänger

## Patentansprüche

1. Verfahren zum Abgleich der Tarifklasse mittels automatischer Überwachung für Endgeräte, zum Beispiel Telefone, eines Telefonnetzes, dadurch gekennzeichnet,
daß zunächst eine normierte Verbindungsart definiert wird, deren zu erwartende Tarifinformation von einem Kunden bzw. einem Betreiber änderbar in einem Tarifspeicher (2) hinterlegt wird,
daß beim Wählen bzw. Erzeugen einer solchen Verbindung durch den Kunden die vom Telefonnetz angelegte Tarifinformation von einer Wahlaussendungseinheit (3) mit der im Tarifspeicher (2) hinterlegten Tarifinformation in einer Vergleichseinheit (4) verglichen wird und
daß bei Abweichungen eine Störungsmeldung zur Störungsbearbeitung (5) erzeugt wird.

2. Verfahren nach Patentanspruch 1, dadurch gekennzeichnet,
daß der Kunde bzw. Betreiber die zu erwartende Tarifinformation und, wenn gewünscht, den Vergleichszeitraum, über eine Eingabeschaltung (1) eingibt,
daß diese Daten im Tarifspeicher (2) hinterlegt werden,
daß beim Wählen einer Rufnummer mittels Wahlaussendungseinheit (3) in der Vergleichseinheit (4) die Daten daraufhin verglichen werden, ob die gewählte Telefonnummer der normierten Verbindung entspricht und/oder ob die aktuelle Uhrzeit mit der für den Prüfzeitraum festgelegten Uhrzeit übereinstimmt, wobei die aktuelle Uhrzeit von einer schaltungsinternen Uhr (6) übernommen wird,
daß bei Erfüllung der beiden Kriterien ein Vergleich der im Tarifspeicher (2) hinterlegten Tarifinformation und der vom Telefonnetz im Tarifempfänger (7) erhaltenen Tarifinformation durchgeführt wird und
daß bei Abweichungen ein Modul Störungsbearbeitung (5) initialisiert wird, das eine Störungsanzeige am Display und/oder eine Störungsmeldung an ein zentrales Hintergrundsystem erzeugt.

3. Verfahren nach Patentanspruch 1 oder 2, dadurch gekennzeichnet,
daß die Eingabe der zu erwartenden Tarifinformation mittels Menüführung im Telefon über die Wähltastatur (1) erfolgt.

4. Verfahren nach einem der Patentansprüche 1 bis 3,
dadurch gekennzeichnet,
daß die Definition eines Ortsgespräches als normierte Verbindung erfolgt.

5. Verfahren nach einem der Patentansprüche 1 bis 4,
dadurch gekennzeichnet,
daß für an zentrale Hintergrundsysteme betriebene Telefone, wie Münz- und Kartentelefone, sowohl ein Prüfzeitraum als auch eine zu erwartende Tarifinformation als Parameter fern änderbar ausgeführt wird.

6. Schaltungsanordnung zur Durchführung des Verfahrens gemäß der Patentansprüche 1 und/oder 2.
